(19) Europäisches Patentamt
European Patent Office
Office européen des brevets

(11) **EP 3 932 702 B1**

(12) **EUROPÄISCHE PATENTSCHRIFT**

(45) Veröffentlichungstag und Bekanntmachung des Hinweises auf die Patenterteilung:
**29.10.2025 Patentblatt 2025/44**

(21) Anmeldenummer: **21020330.3**

(22) Anmeldetag: **25.06.2021**

(51) Internationale Patentklassifikation (IPC):
**B60D 1/06** *(2006.01)* **B60D 1/24** *(2006.01)*
**B60D 1/62** *(2006.01)*

(52) Gemeinsame Patentklassifikation (CPC):
**B60D 1/06; B60D 1/248; B60D 1/54; B60D 1/62; G01L 5/136**

(54) **VERFAHREN ZUR MESSUNG DER VERTIKALEN BELASTUNG UND EINE ANHÄNGERKUPPLUNG**

METHOD FOR MEASURING VERTICAL LOAD AND A TRAILER COUPLING

PROCÉDÉ DE MESURE DE LA CHARGE VERTICALE ET UN ATTELAGE DE REMORQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2020 CZ 20200038**

(43) Veröffentlichungstag der Anmeldung:
**05.01.2022 Patentblatt 2022/01**

(73) Patentinhaber: **Skoda Auto a.s.**
**29301 Mladá Boleslav (CZ)**

(72) Erfinder:
• **Debef, Dominik**
**CZ-58601 Jihlava (CZ)**
• **Mateasko, Dusan**
**51236 Horni Branna (CZ)**
• **Kotrba, Ladislav**
**58601 Jihlava (CZ)**
• **Mejsnar, Miroslav**
**54301 Vrchlabi (CZ)**
• **Hadinec, Tomas**
**50791 Stara Paka (CZ)**

(56) Entgegenhaltungen:
EP-A1- 3 854 612    DE-A1- 102013 007 727
DE-A1- 102020 117 528    DE-B3- 102004 043 181

**Beschreibung**

Technisches Gebiet

Die vorliegende Erfindung betrifft eine Anhängerkupplung eines Fahrzeuges, die eine Vorrichtung zur Messung einer auf die Anhängerkupplung wirkenden vertikalen Belastung umfasst. Diese Vorrichtung umfasst ein an die Anhängerkupplung angebrachtes flexibles Metallband mit Dehnungsmessstreifen. Diese Erfindung betrifft ferner ein Messverfahren zur Bestimmung der vertikalen Belastung, dass durch die Vorrichtung zur Messung der vertikalen Belastung realisiert wird.

Bisheriger Stand der Technik

Im aktuellen Stand der Technik sind Vorrichtungen zur Messung der vertikalen Belastung der Anhängerkupplung bekannt. Die Messung und anschließende Signalisierung dieser Belastung ermöglicht beispielsweise den Fahrer zu informieren, dass sein Anhänger überladet ist, und so einer Beschädigung des Anhängers, der Anhängerkupplung oder des Zugfahrzeuges vorzubeugen.

Im Dokument US20170334256 wird beispielsweise eine Anhängerkupplung mit einem Sensor beschrieben, welcher die Messung der Belastung in vertikaler Achse ermöglicht. Dieser Sensor ist jedoch direkt an dem Kupplungsarm angeordnet, der die Zugkugel zum Fahrzeug befestigt, sodass eine Messung der Belastung im bereits vorhandener Anhängerkupplung den Austausch des gesamten Kupplungsarms erfordert. Weitere Messvorrichtung für eine Anhängerkupplung ist im Dokument DE202011105552 U1 beschrieben, in dieser Vorrichtung ist ein Sensor direkt in der Konstruktion der Anhängerkupplung angeordnet.

Das Dokument US20190033150 beschreibt ein Verfahren zur Messung der Belastung des Kupplungsarms. Dieses Verfahren umfasst eine Anordnung einer Schwingungsquelle und eines Sensors für die Aufzeichnung der Schwingungen am Träger der Anhängerkupplung. Am Träger müssen also wenigstens zwei separate Gegenstände angebracht werden und dies kompliziert den Ein- sowie Ausbau dieser Vorrichtung.

Das Dokument DE 10 2013 007 727 A1 beschreibt eine Anhängekupplung mit einer Auswerteeinrichtung. Die Auswerteeinrichtung ist zur Ermittlung mindestens einer auf das Kuppelelement wirkenden Kraft ausgebildet. Das Kuppelelement weist einen ersten Kraftsensor zur Erfassung erster auf das Kuppelelement wirkender Kraftkomponenten und zur Ausgabe eines die ersten Kraftkomponenten repräsentierenden ersten Kraftsignals auf. Die Anhängekupplung weist einen zweiten Kraftsensor zur Erfassung zweiter auf das Kuppelelement wirkender Kraftkomponenten und zur Ausgabe eines die zweiten Kraftkomponenten repräsentierenden zweiten Kraftsignals auf. Die Auswerteeinrichtung ist zur Ermittlung der auf das Kuppelelement wirkenden Kraft anhand des ersten Kraftsignals unter Berücksichtigung des zweiten Kraftsignals im Sinne einer Kompensation des ersten Kraftsignals ausgestaltet.

Das Dokument DE 10 2004 043 181 B3 betrifft eine Sensoranordnung und ein Verfahren zur Detektion des Einflusses von auf Konstruktionselementen wirkenden statischen und dynamischen Belastungen. Die Sensoranordnung ist so ausgebildet, dass auf einem gemeinsamen, an einem Konstruktionselement befestigbaren Träger mindestens ein Piezofasersensor und Dehnmessstreifen fixiert sind.

Das Dokument EP 3 854 612 A1 beschreibt eine Vorrichtung zum Ankuppeln eines Anhängers. Es ist vorgesehen, dass im Betrieb an einem Ankuppelelement der Vorrichtung angreifende und von einem Haltearm der Vorrichtung auf die Kraftfahrzeugkarosserie übertragene Kräfte durch eine Auswerteeinheit mit einer Sensoranordnung erfasst werden, die mindestens drei Deformationssensoren aufweist.

Neben der Notwendigkeit eines wesentlichen Eingriffs in die Konstruktion der Anhängerkupplung ist ein Nachteil der oben beschriebenen bekannten Lösungen auch die Tatsache, dass es mit einem Sensor schwierig ist, die Belastung in einer konkreten Richtung genau zu messen. Solcher Sensor muss an einer Stelle angeordnet werden, wo die Anhängerkupplung nur in der gewünschten Richtung belastet ist, jedoch solche Stelle an der Anhängerkupplung nicht vorhanden sein muss.

Es wäre also geeignet eine Lösung vorzuschlagen, welche es ermöglichen würde, die senkrechte Belastung der Anhängerkupplung zu messen und dabei keinen wesentlichen Eingriff in die Konstruktion der Anhängerkupplung zu erfordern, sodass es möglich wäre, diesen einfach an die vorhandene Anhängerkupplung anzubringen.

Darstellung der Erfindung

Die Nachteile des Standes der Technik werden partiell durch eine Anhängerkupplung gelöst, die einen Kupplungsarm sowie eine Zugkugel und ferner eine Vorrichtung zur Messung einer vertikalen Belastung der Fahrzeuganhängerkupplung, umfassend ein flexibles Metallband und eine Steuereinheit gelöst. Die Anhängerkupplung umfasst dabei einen zum Fahrzeug befestigten Kupplungsarm und an einer Kupplungsarmseite ist ein Metallband angebracht, der an der zur Armoberfläche ausgerichteten Seite drei Dehnungsmessstreifen aufweist. Die Steuereinheit ist datentechnisch mit den Dehnungsmessstreifen verbunden und für die Ermittlung der vertikalen Belastung der Anhängerkupplung unter Nutzung der Daten von Dehnungsmessstreifen ausgelegt. Die Anbringung des Metallbandes an den Kupplungsarm ist bevorzugt durch Schraubverbindungen realisiert, jedoch kann ferner angeschweißt, angeklebt oder auf andere bekannte Weise realisiert werden. Bevorzugt wird das Metallband angeschraubt und zugleich angeklebt. Der Klebstoff erhöht die Reibung zwischen dem Metallband und der Kupplungsarmoberfläche und verbessert somit die Übertragung der Spannung an die Dehnungsmessstreifen und dadurch die Messgenauigkeit.

Die Nutzung des Metallbandes als Träger der Dehnungsmessstreifen vereinfacht deutlich die Anbringung der Dehnungsmessstreifen an den Kupplungsarm, da die Dehnungsmessstreifen nicht einzeln angebracht und an der Konstruktion der Anhängerkupplung keine wesentliche Änderungen vorgenommen werden müssen, beispielsweise kann es nur die Vorbereitung der Gewindeöffnungen für Schrauben benötigen. Die Spannungs- bzw. Dehnungswerte werden dann durch das Metallband vom Kupplungsarm an die Dehnungsmessstreifen übertragen. Das Material des Metallbandes ist ausreichend flexibel gewählt, damit es die Spannung vom Kupplungsarm zu den Dehnungsmessstreifen überträgt, ohne diese wesentlich zu dämpfen.

Das Metallband umfasst an der der Oberfläche des Kupplungsarms zugewandten Seite wenigstens vier hervorstehende Kontaktflächen, wobei zwischen jeden zwei benachbarten Kontaktflächen sich höchstens ein Dehnungsmessstreifen befindet. Die Kontaktflächen besorgen also den Kontakt zwischen dem Metallband und dem Kupplungsarm, sodass durch diese die Spannung aus dem Kupplungsarm an die Dehnungsmessstreifen übertragen wird. Gleichzeitig ist jeder Dehnungsmessstreifen zwischen den hervorstehenden Kontaktflächen versteckt, sodass dieser besser gegen eine mechanische Beschädigung geschützt ist, z.B. gegen das Zerdrücken bei der Anbringung des Metallbandes an den Kupplungsarm. Durch die Anordnung höchstens eines Dehnungsmessstreifens zwischen zwei benachbarte Flächen wird sichergestellt, dass die Spannung im höchsten Maße wenigstens partiell über verschiedene Kontaktflächen an den jeweiligen Dehnungsmessstreifen übertragen wird, d.h. über diejenige Flächen, zwischen denen der Dehnungsmessstreifen angeordnet ist. Die verschiedenen Kontaktflächen sind im Kontakt mit unterschiedlichen Teilen der Oberfläche des Kupplungsarms, sodass durch diese eine andere Spannung von anderen Stelle übertragen wird, wodurch sichergestellt wird, dass die unterschiedlichen Dehnungsmessstreifen hinreichend unterschiedliche Spannungswerte messen.

Darüber hinaus ist die Steuereinheit vorteilhaft für die Bestimmung der horizontalen Belastung in der X-Achse und/oder Y-Achse unter der Nutzung der Dehnungsmessstreifen ausgelegt. Als X-Achse wird die in Fahrtrichtung des Fahrzeuges, d.h. parallel mit der Fahrzeuglängsachse verlaufende horizontale Achse bezeichnet und die Belastung in der X-Achse ist also die parallel zur Fahrzeuglängsachse wirkende Belastungskomponente. Als Y-Achse wird die rechtwinklig zur X-Achse verlaufende horizontale Achse bezeichnet, also die von einer zur anderen Fahrzeugseite verlaufende Achse. Dritte Achse ist die senkrechte Z-Achse.

Vorteilhaft sind die Dehnungsmessstreifen in einem ausreichenden Abstand voneinander angeordnet, beispielsweise wenigstens 2 cm, vorteilhafter wenigstens 3 cm. Dadurch wird sichergestellt, dass jeder Dehnungsmessstreifen die Verformung an anderer Stelle misst, sodass diese bei bestimmter Belastung der Anhängerkupplung wenigstens partiell unterschiedliche Werte messen. Der jeweilige Dehnungsmessstreifen sendet dann an die Steuereinheit bestimmte Daten, welche die anderen Dehnungsmessstreifen nicht liefern, und durch die Kombination der Werte aus allen Dehnungsmessstreifen kann anschließend der Wert der tatsächlichen vertikalen Belastung ermittelt werden, obwohl keiner der Dehnungsmessstreifen selbst solche Angaben bereitstellt, aus denen man die tatsächliche Belastung in jeweiliger Achse bestimmen könnte. Mit anderen Worten ist es vorteilhaft, wenn die Daten aus verschiedenen Dehnungsmessstreifen unterschiedliche Belastungskurven angeben, einfach gesagt, wenn diese für bestimmte Belastung der Anhängerkupplung zum gleichen Zeitpunkt verschiedene Messwerte messen, sodass sie verschiedene Signale (z.B. mit anderer Frequenz oder Amplitude) an die Steuereinheit senden.

Noch vorteilhafter sind die Positionen der Dehnungsmessstreifen am Metallband, die nach der Anbringung des Metallbandes an den Kupplungsarm die Position der Dehnungsmessstreifen gegenüber dem Kupplungsarm bestimmen, so zu wählen, damit der erste Dehnungsmessstreifen vorwiegend auf die Belastung in der X-Achse, der zweite Dehnungsmessstreifen vorwiegend auf die Belastung in der Y-Achse und der dritte Dehnungsmessstreifen vorwiegend auf die Belastung in der Z-Achse sensibel ist. Bei einer Belastung der Anhängerkupplung beispielsweise nur in der X-Achse werden somit die größten Spannungs-/Dehnungswerte vom ersten Dehnungsmessstreifen gemessen, bei einer Belastung nur in der Z-Achse werden die größten Werte vom dritten Dehnungsmessstreifen gemessen usw. Die Begriffe der erste, zweite und dritte Dehnungsmessstreifen dienen hier nur der Unterscheidung der einzelnen Dehnungsmessstreifen, sie müssen die Reihenfolge der Dehnungsmessstreifen von einem Ende zum anderen Ende des Metallbandes nicht widerspiegeln. Das Metallband wird vor der Anbringung vorteilhaft so geformt, damit er wenigstens annähernd die Form des Kupplungsarms folgt, sodass die durch die Anbringung des Metallbandes entstandene Spannung minimiert wird und die Form des Metallbandes zugleich seine Position am Kupplungsarm bestimmt.

Diese Positionen der Dehnungsmessstreifen können beispielsweise durch die Computersimulation der Belastung mit FEM bestimmt werden, wo für die konkrete Gestalt der Anhängerkupplung Positionen an der Oberfläche des Kupplungsarms mit signifikanten Dehnungen in einzelnen Achsen ermittelt werden. Die Dehnungen können ebenfalls bei unterschiedlichen Belastungen an größerer Anzahl von verschiedenen Positionen am Kupplungsarm gemessen und anschließend die Positionen mit größerer Dehnung bei der Belastung in jeweiliger Achse ausgewählt werden.

Vorteilhafte Vorrichtung zur Messung der vertikalen Belastung umfasst ferner eine das Metallband partiell umgebende Abdeckung. Die Abdeckung kann aus Kunststoff oder Metall sein und direkt zum Metallband oder der Oberfläche des Kupplungsarms befestigt werden. Die Abdeckung gewährt dem Metallband, insbesondere den Dehnungsmessstreifen und eventuell den Schrauben, einen Schutz gegen die mechanische oder chemische Beschädigung.

Vorteilhaft ist das Metallband an der oberen Seite des Kupplungsarms angebracht. Experimentell wurde ermittelt, dass sich wenigstens bei einigen, geläufigsten Typen der Kupplungsarme die durch die Belastung des Kupplungsarms verursachten Dehnungen meistens an der Oberseite des Kupplungsarms zeigen, sodass die Anordnung der Dehnungsmessstreifen an der Oberseite die genaueste Messung sicherstellen wird. Die Oberseite des Kupplungsarms ist dabei derjenige Teil der Oberfläche des Kupplungsarms, der bei der Oberansicht des Kupplungsarms sichtbar ist, d.h. der Teil der Oberfläche, wo die vom Kupplungsarm auswärts gerichteten Normalen zur Oberfläche eine vertikal nach oben gerichtete positive Komponente aufweisen.

Die Nachteile des Standes der Technik werden ferner durch das Verfahren zur Messung der vertikalen Belastung der Anhängerkupplung des Fahrzeuges gelöst, das durch die oben beschriebene Vorrichtung zur Messung der vertikalen Belastung und/oder durch eine Anhängerkupplung mit solcher Vorrichtung zur Messung der vertikalen Belastung realisiert wird. Die Vorrichtung zur Messung der vertikalen Belastung umfasst ferner einen Speicher und das Verfahren umfasst die Schritte:

- Messung der Spannungswerte durch wenigstens drei Dehnungsmessstreifen,

- Absenden der Daten vom Dehnungsmessstreifen an die Steuereinheit,

- Einsetzen der von Dehnungsmessstreifen gemessenen Werte für die unabhängigen Variablen durch die Steuereinheit in die im Speicher hinterlegte Polynomfunktion, welche die vertikale Belastung der Anhängerkupplung repräsentiert, wobei die Koeffizienten der die vertikale Belastung repräsentierenden Polynomfunktion Regressionskoeffizienten sind, die durch die Regressionsanalyse ermittelt wurden, wo die abhängige Variable der tatsächliche Wert der vertikalen Belastung ist und die unabhängigen Variablen die von Dehnungsmessstreifen gemessenen Werte während einer Serie von beispielhaften Belastungen der Anhängerkupplung verteilt im ganzen Bereich der erwarteten Belastung der Anhängerkupplung sind, und

- Berechnung der die vertikale Belastung repräsentierenden Polynomfunktion für die Ermittlung des Wertes der auf die Anhängerkupplung wirkenden vertikalen Belastung.

Grundsätzlich also gehen dem eigentlichen Messverfahren, dass jedes Mal wiederholt wird, wenn der Wert der vertikalen Belastung der Anhängerkupplung ermittelt werden soll, einige Schritte der Kalibrierung der Vorrichtung vor, die wenigstens einmal für bestimmten Typ der Anhängerkupplung und der Vorrichtung zur Messung der vertikalen Belastung, d.h. insbesondere bezüglich der Form des Kupplungsarms, des Materials und der Form des Metallbandes, des Typs der verwendeten Dehnungsmessstreifen usw. erfolgen muss. Die Kalibrierung für bestimmte Vorrichtung zur Messung der vertikalen Belastung an bestimmter Anhängerkupplung kann also an einem anderen gleich ausgeführten Einzelstück der Vorrichtung zur Messung der vertikalen Belastung an gleich ausgeführter Anhängerkupplung. Kleine Abweichungen bei der Messung mit gleich ausgeführten Vorrichtungen können nach dem Einbau durch die Kalibrierung zur Beseitigung kleiner Ungenauigkeiten behoben werden, bei der die Anhängerkupplung mit bekannter Kraft belastet wird und die Ausgabe von Dehnungsmessstreifen in der Steuereinheit anschließend mit Konstanten multipliziert wird, damit die berechnete Belastung der wirklichen bekannten Belastung entspricht.

Infolge der Kalibrierung ist in dem Speicher der Vorrichtung zur Messung der vertikalen Belastung die vertikale Belastung der Anhängerkupplung repräsentierende Polynomfunktion gespeichert. Für die Unbekannten in dieser Polynomfunktion werden während der Messung die Werte von Dehnungsmessstreifen eingesetzt und durch die Berechnung dieser Polynomfunktion wird der Wert der vertikalen Belastung ermittelt. Dabei bestimmen diese Polynomfunktion die Koeffizienten, welche durch die Regressionsanalyse der Daten ermittelt werden, die aus der Messung der Spannung durch die Dehnungsmessstreifen am Metallband während einer Reihe von Modellbelastungen, d.h. bei der Belastung der Anhängerkupplung mit unterschiedlichen bekannten Kräften erfasst wurden. Diese Modellbelastungen werden dabei so gewählt, damit sie mit bestimmten Abständen den gesamten erwarteten Bereich der Belastung der Anhängerkupplung abdecken, d.h. mit anderen Worten, damit die bei Modellbelastungen gemessenen Daten, welche im Grunde eine Muster-Menge darstellen, ungefähr die Situationen abdecken, die bei der Messung der vertikalen Belastung beim Fahrzeugbetrieb wirklich eintreten.

Bei jeder Messung, d.h. bei jedem Lauf des oben beschriebenen Verfahrens, setzt die Steuereinheit in diese Polynomfunktion die von den Dehnungsmessstreifen empfangene Spannungswerte ein und als Ergebnis wird der Wert der Belastungen ermittelt, welche die gemessenen Spannungswerte verursacht haben.

Das Verfahren der Messung der vertikalen Belastung umfasst ferner vorteilhaft die Schritte:

- Einsetzen der von Dehnungsmessstreifen gemessenen Werte durch die Steuereinheit in zwei weitere Polynomfunktionen, welche die vertikale Belastung der Anhängerkupplung in zwei zu einander senkrechten horizontalen Achsen X und Y repräsentieren, wobei die Koeffizienten der die vertikale Belastung in Achse X repräsentierenden Polynomfunktion Regressionskoeffizienten sind, die durch die Regressionsanalyse ermittelt wurden, wo die abhängige Variable der tatsächliche Wert der vertikalen Belastung in Achse X ist, und die Koeffizienten der die vertikale Belastung in Achse Y repräsentierenden Polynomfunktion Regressionskoeffizienten sind, die durch die Regressionsanalyse ermittelt wurden, wo die abhängige Variable der tatsächliche Wert der vertikalen Belastung in Achse Y ist, wobei die unabhängigen Variablen in beiden Fällen die von Dehnungsmessstreifen gemessenen Werte während einer Serie von beispielhaften Belastungen der Anhängerkupplung verteilt im ganzen Bereich der erwarteten Belastung der Anhängerkupplung sind, und

- Berechnung der die horizontale Belastung in Achsen X und Y repräsentierenden Polynomfunktionen für die Ermittlung des Wertes der auf die Anhängerkupplung wirkenden horizontalen Belastung.

Mit dem erfindungsgemäßen Verfahren wird also nicht nur der Wert der auf die Anhängerkupplung wirkenden vertikalen Belastung, sondern auch der auf diese Anhängerkupplung wirkenden horizontalen Belastungen ermittelt. Bei der Kalibrierung werden also durch die Regressionsanalyse der während einer Reihe von Modellbelastungen erfassten Daten die Regressionskoeffizienten für drei verschiedene Polynomfunktionen mit gleichen unabhängigen Variablen, jede diese Polynomfunktion repräsentiert die Belastung in einer der Achsen. Die Steuereinheit setzt dann gleiche, durch Dehnungsmessstreifen gemessenen Werte in diese drei Polynomfunktionen ein und berechnet diese Polynomfunktionen, wodurch die Werte der Belastungen in einzelnen Achsen ermittelt werden.

Das Verfahren der Messung der vertikalen Belastung umfasst ferner vorteilhaft die Schritte:

- Senden des Wertes der vertikalen Belastung und/oder des Wertes der horizontalen Belastung in Achsen X und/oder Y an die Ausgabeeinrichtung.

Als Ausgabeeinrichtung kann beispielsweise ein Bildschirm am Armaturenbrett, ein Smartphone, eine hinter der Fahrzeugheckscheibe angeordnete Lichtquelle, die Fahrzeugleuchte, die Hupe oder Folgetonhorn oder Lautsprecher am oder im Fahrzeug usw. Infolge der Absendung der Werte an die Ausgabeeinrichtung kann zum Beispiel das Beladen eingestellt werden, ein Warnhinweis für den Fahrer, dass der Anhänger überlastet oder die Ladung ungünstig verteilt ist, eingeschaltet werden oder die Werte der Belastung der Anhängerkupplung können für weitere Analyse gespeichert werden.

Erläuterung der Zeichnungen

Die Darstellung der Erfindung wird weiter anhand von Ausführungsbeispielen erläutert, die unter Nutzung von Zeichnungen beschrieben sind, wobei zeigen die:

Fig. 1 die erfindungsgemäße Vorrichtung in einer Untenansicht, wobei die Kontaktflächen mit Öffnungen für Schrauben sowie drei zwischen den Kontaktflächen angeordnete Dehnungsmessstreifen sichtbar sind und wobei die Steuereinheit nicht angezeigt wird,

Fig. 2 eine perspektivische Ansicht der Anhängerkupplung mit der erfindungsgemäßen Vorrichtung zur Messung der vertikalen Belastung, wobei diese Vorrichtung zur Messung der vertikalen Belastung an der Oberseite des Kupplungsarms angebracht ist,

Fig. 3 eine schematische Darstellung der Vorrichtung zur Messung der vertikalen Belastung, wobei neben des Metallbandes mit Dehnungsmessstreifen aus Fig. 1 auch der A/D-Wandler, die Steuereinheit und Ausgabeeinrichtung dargestellt sind,

Fig. 4 Ein Ablaufdiagramm des Verfahrens, mit dem bei den Modellbelastungen die Funktion der Abhängigkeit der wirklichen Belastung in einzelnen Achsen von den durch die Dehnungsmessstreifen gemessenen Werten ermittelt wird, und die

Fig. 5 ein Ablaufdiagramm des erfindungsgemäßen Verfahrens zur Messung der vertikalen Belastung, umfassend die Messung der Spannung durch Dehnungsmessstreifen und das Einsetzen der gemessenen Werten in die Funktionen der Abhängigkeit der Werte der wirklichen Belastung in einzelnen Achsen von den durch die Dehnungsmessstreifen gemessenen Werten.

<u>Ausführungsbeispiele der Erfindung</u>

Die aufgeführten Ausführungen stellen die Ausführungsvarianten der Erfindung dar, die jedoch aus Sicht des Schutzumfangs keinen einschränkenden Einfluss haben.

Die vorliegende Erfindung betrifft eine Vorrichtung 1 zur Messung der vertikalen Belastung der Anhängerkupplung 2. Diese Vorrichtung 1 zur Messung der vertikalen Belastung umfasst ein flexibles Metallband 3, das drei Dehnungsmessstreifen 5 und fünf Kontaktflächen 6 aufweist, und ferner eine Steuereinheit 8, die für die Unterbringung im Bereich des Steckers an der Anhängerkupplung 2 ausgestaltet ist. Diese Steuereinheit 8 ist datentechnisch mit den Dehnungsmessstreifen 5 verbunden und für die Berechnung der vertikalen Belastung aufgrund der Daten von Dehnungsmessstreifen 5 ausgelegt. Der resultierende Wert der vertikalen Belastung wird dann auf beliebige Weise dem Fahrer und/oder dem Bordcomputer des Fahrzeuges übermittelt. Die Steuereinheit 8 kann eine selbständige Recheneinrichtung oder zum Beispiel ein Bestandteil des Bordcomputers des Fahrzeuges sein.

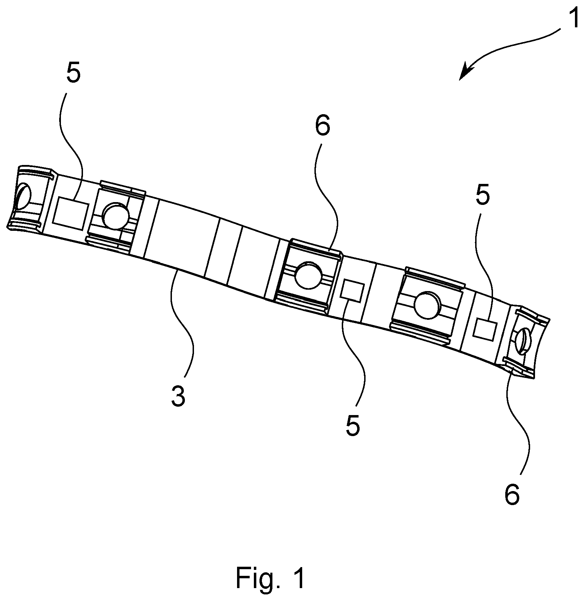

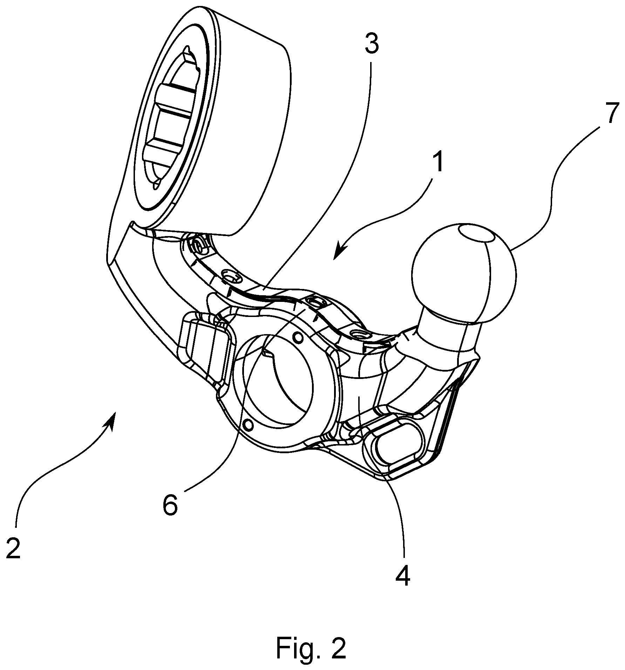

Das Metallband 3 ist aus beliebigem Metall hergestellt, das ausreichend flexibel ist, um die Dehnungen am Kupplungsarm 4 an die Dehnungsmessstreifen 5 zu übertragen, beispielsweise aus Stahl, vorteilhaft mit Korrosionsschutzbeschichtung, oder aus Edelstahl usw. Vorteilhaft ist das Metallband 3 vor der Anbringung an den Kupplungsarm 4 so geformt, damit es wenigstens annähernd die Form des Kupplungsarms 4 an der jeweiligen Stelle an der Oberfläche des Kupplungsarms 4 folgt, wo die Vorrichtung 1 zur Messung der vertikalen Belastung angebracht werden soll. Durch dieses Ausformen wird die Spannung verringert, welche in einem ebenen Metallband 3 bei der Anbringung an den gekrümmten Kupplungsarm 4 entstehen würde und die gemessenen Werte im gewissen Maße verzerren könnte. Der Einfluss dieser Spannung kann jedoch alternativ oder zusätzlich softwaremäßig durch Kalibrierung der Steuereinheit 8 reduziert werden. Das Metallband 3 vor der Anbringung an den Kupplungsarm 4 zeigt die Fig. 1 und in der Fig. 2 ist dieses Metallband 3 angebracht am Kupplungsarm 4 der Anhängerkupplung 2 dargestellt.

Als Stelle an der Oberfläche des Kupplungsarms 4, wo die Vorrichtung 1 zur Messung der vertikalen Belastung angebracht ist, kann prinzipiell eine beliebige Stelle sein, an der sich die Dehnungen des Kupplungsarms 4 bei seiner vertikalen Belastung zeigen. Vorteilhaft wird jedoch solche Stelle an der Oberseite des Kupplungsarms 4 gewählt, wo diese Dehnungen am ausgeprägtesten auftreten. Konkrete Position der Dehnungsmessstreifen 5 gegenüber dem Kupplungsarm 4 ist dann, unter anderem, durch die Position der Dehnungsmessstreifen 5 am Metallband 3 bestimmt, die so gewählt wird, damit verschiedene Dehnungsmessstreifen unterschiedliche Werde messen, was in der einfachsten Ausführung wenigstens dadurch sichergestellt ist, dass die verschiedenen Dehnungsmessstreifen 5 nicht eng aneinander, sondern beabstandet voneinander angeordnet sind.

Vorteilhafter ist die Position der Dehnungsmessstreifen 5 am Metallband 3 so gewählt, damit jeder der genannten drei Dehnungsmessstreifen 5 an eine Stelle angeordnet ist, wo eine der Komponenten der Belastungen in Achsen X, Y und Z am deutlichsten auftritt, wobei Z die vertikale Achse ist und X und Y die zueinander senkrechten horizontalen Achsen sind. Solche Position kann durch die für Fachkundige bekannte Computersimulation unter Verwendung von FEM ermittelt werden, oder man kann Versuchsmessungen mit Dehnungsmessstreifen an einer großen Reihe unterschiedlicher Stellen am Kupplungsarm 4 und/oder an dem zum Kupplungsarm 4 befestigten Metallband 5 bei der Belastung des Kupplungsarms 4 vornehmen und anschließend drei Stellen mit deutlichsten Komponenten in der X-Achse für den ersten, in der Y-Achse für den zweiten und in der Z-Achse für den dritten Dehnungsmessstreifen 5 auswählen.

Aus den durch die drei Dehnungsmessstreifen 5 gemessenen Werten, wobei jeder Dehnungsmessstreifen 5 wenigstens partiell unterschiedliche Werte misst, kann dann die Steuereinheit 8 den Wert der vertikalen Belastung berechnen, obwohl keiner der Dehnungsmessstreifen 5 allein zur Bestimmung der vertikalen Belastung ausreichend ist, da sich in den gemessenen Werte jeweils die Spannungskomponenten in allen Richtungen auswirken. Das durch die Steuereinheit 8 realisierte Verfahren zur Messung der vertikalen Belastung wird im Weiteren ausführlicher beschrieben.

In der dargestellten Ausführung umfasst das Metallband 3 fünf hervorstehende Kontaktflächen 6, wie in Fig. 1 angezeigt ist. Diese Kontaktflächen 6 realisieren den Kontakt zwischen dem Metallband 3 und der Oberfläche des Kupplungsarms 4, sie übertragen also die Spannung vom Kupplungsarm 4 an die Dehnungsmessstreifen 5. In der dargestellten Ausführung geht durch jede Kontaktfläche 6 eine Öffnung für die Schraube hindurch, also wird das Metallband 3 zur Oberfläche des Kupplungsarms 4 angeschraubt. Alternativ oder zusätzlich kann das Metallband 3 angeklebt werden. Der Übertragung der Dehnungen vom Kupplungsarm 4 an die Dehnungsmessstreifen 5 kann dann neben den Kontaktflächen 6 auch der Klebstoff begünstigen. Alternativ kann die erfindungsgemäße Vorrichtung beispielsweise angeschweißt werden.

Wie der Fig. 1 zu entnehmen ist, befindet sich zwischen zwei benachbarten Kontaktflächen 6 jeweils einer oder keiner Dehnungsmessstreifen 5. Angesichts dessen, dass verschiedene Kontaktflächen 6 mit unterschiedlichen Stellen an der Oberfläche des Kupplungsarms 4 im Kontakt sind, wird dann an die verschiedenen Dehnungsmessstreifen 5 unterschiedliche Spannung übertragen, da an jeder Stelle der Oberfläche des Kupplungsarms 4 tritt seine Belastung anders auf, sodass aus den Daten der Dehnungsmessstreifen 5 die vertikale Belastung berechnet werden kann.

In der dargestellten Ausführung wurden die Stellen am Metallband 3, wo die Dehnungsmessstreifen 5 angeklebt sind, durch die FEM so bestimmt, damit an jeder dieser Stelle eine Komponente (andere als an den anderen Stellen) der Spannung mehr ausgeprägt ist als die sonstigen Komponenten. Einer der Dehnungsmessstreifen 5 ist in der Nähe der Zugkugel 7 angeordnet, wo die Belastung in der X-Achse am ausgeprägtesten ist, die parallel mit der Fahrzeuglängsachse, also in der Fahrtrichtung verläuft. Der zweite Dehnungsmessstreifen 5 ist im Bereich des Steckers angeordnet, d.h. über der in Fig. 2 sichtbaren durchgehenden Öffnung in der Mitte des Kupplungsarms 4, wo die Belastung in der Y-Achse am ausgeprägtesten ist, die senkrecht zu der Fahrzeuglängsachse verläuft. Der letzte Dehnungsmessstreifen 5 ist in der Nähe des Schwenkgelenks für die Anbindung des Kupplungsarms 4 an das Fahrzeug angeordnet, wo die Belastung in der vertikalen Z-Achse am ausgeprägtesten ist. Für andere Form des Kupplungsarms 4 könnten jedoch diese Anordnungen unterschiedlich sein und vorteilhaft ist für jeden Typ des Kupplungsarms 4 eine individuelle bevorzugte Anordnung der Dehnungsmessstreifen 5 definiert, die dann für die Vorrichtung 1 zur Messung der vertikalen Belastung an allen Kupplungsarmen 4 solchen Typs verwendet werden kann. Das Metallband 3 ist dabei vorteilhaft so vorgeformt, damit seine Form einer Stelle an der Oberfläche des Kupplungsarms 4 entspricht, sodass die Position des Metallbandes 3 an dem Kupplungsarm 4 durch die Form der beiden Bauteile eindeutig bestimmt ist und muss beim Einbau nicht separat bestimmt werden. Kleine Abweichungen in der Position des Metallbandes 3 und/oder der Dehnungsmessstreifen 5 können durch Kalibrierung kompensiert werden, wie weiter beschrieben wird.

Die durch Dehnungsmessstreifen 5 gemessenen Werte werden an die Steuereinheit 8 mit einem Speicher gesendet, wobei zwischen dem Dehnungsmessstreifen 5 und der Steuereinheit 8 ferner üblicherweise ein A/D-Wandler 8 bereitgestellt wird, beispielsweise kann auch ein Signalverstärker genutzt werden. Im Speicher der Steuereinheit 8 sind die Regressionskoeffizienten hinterlegt, mit deren Hilfe die Belastung in einzelnen Achsen aus den durch Dehnungsmessstreifen 5 gemessenen Spannungswerten (beziehungsweise Dehnungswerten) berechnet wird. Das Verfahren zur Ermittlung dieser Koeffizienten wird ausführlicher weiter beschrieben, vereinfacht werden jedoch die Regressionskoeffizienten durch die Regressionsanalyse der bei Modellbelastungen des Kupplungsarms 4 mit Vorrichtung 1 zur Messung der vertikalen Belastung erfassten Daten. Bei der eigentlichen Messung werden dann die Werte von den Dehnungsmessstreifen 5, die von allen Dehnungsmessstreifen 5 im bestimmten gleichen Zeitpunkt erfasst wurden, an die Steuereinheit 8 gesendet und in die Formel des Polynoms mit Regressionskoeffizienten eingesetzt, und die Ausgabe von der Steuereinheit 8 sind dann drei Werte der Belastung in drei Achsen X, Y und Z.

Die berechneten Werte der Belastung werden von der Steuereinheit 8 an geeignete Ausgabeeinrichtung 10 gesendet, beispielsweise an einen Bildschirm im Fahrzeug, an ein Smartphone, an die Lautsprecher usw., und/oder an den Bordcomputer zur weiteren Bearbeitung. Der Bordcomputer kann beispielsweise auswerten, dass der Anhänger überlastet ist und anschließend den Fahrer benachrichtigen. Möglich ist auch die Nutzung beispielsweise der Hupe oder einer im Heckbereich des Fahrzeuges angeordneten Lichtquelle, z.B. LED-Baugruppe hinter der Heckscheibe, für die Signalisierung an den Fahrer beim Beladen des Anhängers, dass die zulässige Höchstbelastung erreicht wurde. Alternativ kann zur Signalisierung die Heckleuchte des Fahrzeuges, die Hupe usw. genutzt werden. Die Datenkommunikation der Steuereinheit 8 mit den Dehnungsmessstreifen 5 und/oder mit der Ausgabeeinrichtung 10, wie dem Bildschirm, dem Lautsprecher und der Lichtquellen, kann drahtgebunden oder drahtlos erfolgen.

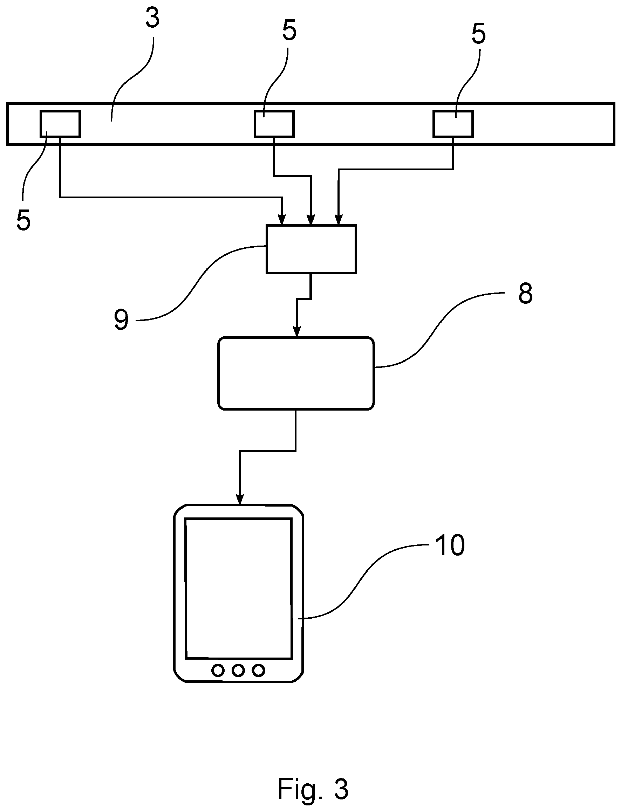

Die erfindungsgemäße Vorrichtung 1 zur Messung der vertikalen Belastung ist schematisch in Fig. 3 dargestellt, wo das Metallband 3 mit Dehnungsmessstreifen 5 angezeigt ist, von denen die Daten an den A/D-Wandler 9 und anschließend an die Steuereinheit 8 gesendet werden. Die berechneten Werte der Belastung werden von der Steuereinheit 8 in dargestellter Ausführung an die Ausgabeeinrichtung 10 gesendet, die hier ein Tablet oder eventuell ein Touchscreen zum Einbau in das Armaturenbrett darstellt.

Die Anzahl der Dehnungsmessstreifen 5 am Metallband 3 kann alternativ höher als drei sein, ebenso die Anzahl der Kontaktflächen 6 kann anders sein, jedoch vorteilhaft ist die Anzahl der Kontaktflächen wenigstens um eine Einheit höher als die Anzahl der Dehnungsmessstreifen 5. In einer alternativen Ausführung kann das Metallband 3 keine Kontaktflächen 3 umfassen und ist dann an der Oberfläche des Kupplungsarms 4 mit seiner gesamten Seite angepresst und befestigt.

In einer weiteren alternativen Ausführung wird das Metallband 3 vor der Befestigung an den Kupplungsarm 4 nicht geformt, sodass es sich an die konkrete Form des Kupplungsarms 4 erst während der Befestigung angleicht. Diese Ausführung ist insbesondere für die Anordnung an einer flacheren Oberfläche des Kupplungsarms 4 geeignet. Die Vorrichtung 1 zur Messung der vertikalen Belastung kann an anderer Seite des Kupplungsarms 4, z.B. seitlich oder von unten angeordnet werden.

In einigen Ausführungen kann die Vorrichtung 1 zur Messung der vertikalen Belastung ferner eine Abdeckung umfassen, die partiell das Metallband 3 mit Dehnungsmessstreifen 5 umgibt. Die Abdeckung umgibt zum Beispiel das Metallband 3 von der Seite und von oben, wobei von unten ist sie offen, damit sie den Kontakt zwischen dem Metallband 3 und/oder den Dehnungsmessstreifen 5 und der Oberfläche des Kupplungsarms 4 nicht hindert. Die Abdeckung kann beispielsweise aus Metall oder Kunststoff sein und erhöht die Beständigkeit der erfindungsgemäßen Vorrichtung gegen Korrosion oder mechanische Beschädigung. In einigen Ausführungen kann die Abdeckung zum Metallband 3 vor seiner Anbringung an den Kupplungsarm 4 befestigt werden, in anderen Ausführungen kann die Abdeckung zur Vorrichtung erst nach der Anbringung des Metallbandes 3 an die Oberfläche des Kupplungsarms 4 angeordnet werden. Die Abdeckung kann zum Beispiel angeklebt werden, sei es zum Metallband 3 und/oder zur Oberfläche des Kupplungsarms 4, sie kann mit gleichen Schrauben, mit denen das Metallband 3 zum Kupplungsarm 4 befestigt ist, oder mit anderen angeschraubt werden, sie kann zum Kupplungsarm 4 mit einer Fassung mit geeigneter Form befestigt werden usw.

Die vorliegende Erfindung betrifft ferner eine Anhängerkupplung 2, die einen Kupplungsarm 4 und eine am Kupplungsarm 4 befestigte Zugkugel 7 umfasst, wobei der Kupplungsarm 4 zum Fahrzeug befestigbar ist. Diese Anhängerkupplung 2 umfasst die oben beschriebene Vorrichtung 1 zur Messung der vertikalen Belastung. Die Anhängerkupplung 2 zeigt die Fig. 2. In dargestellter Ausführung ist der Kupplungsarm 4 schwenkbar zum Fahrzeug befestigbar, jedoch alternativ kann ein Kupplungsarm verwendet werden, der gegenüber dem Fahrzeug unbeweglich ist.

Die Erfindung betrifft ferner das Verfahren der Messung der vertikalen Belastung. Dieses Verfahren wird durch die oben beschriebene Vorrichtung 1 zur Messung der vertikalen Belastung und/oder durch die oben beschriebene Anhängerkupplung 2 durchgeführt. Bestandteil der Vorrichtung zur Durchführung dieses Verfahren ist ein Speicher, der zum Beispiel eine Komponente der Steuereinheit 8 ist, alternativ kann er auch eine selbständige Einrichtung darstellen.

Dieses Verfahren umfasst im Ausführungsbeispiel die Kalibrierungsschritte, die einmal für konkrete Anhängerkupplung 2 ablaufen, beispielsweise während der Entwicklung solcher Anhängerkupplung 2, und durch die Kalibrierungs-Steuereinheit mit Kalibrierungs-Speicher durchgeführt werden, welche der Steuereinheit 8 und dem Speicher, die Bestandteil der Vorrichtung 1 zur Messung der vertikalen Belastung sind, gleich sein können, müssen jedoch nicht. Während der Kalibrierungsschritte ist das Metallband 3 mit Dehnungsmessstreifen 5 an dem Kupplungsarm 4 der Anhängerkupplung 2 angeordnet und diese Kupplungsarm 4 wird mit einer Reihe von in Achsen X, Y und/oder Z wirkenden Modellbelastungen belastet, wo Z die vertikale Achse ist und X und Y zwei zueinander senkrechten horizontalen Achsen sind. Bei jeder Belastung aus dieser Reihe werden in den Kalibrierungs-Speicher die Werte $F_X, F_Y$ und $F_Z$ gespeichert, welche die bekannten Belastungen in einzelnen Achsen repräsentieren, sowie die Werte $T_1, T_2$ und $T_3$, welche die durch den ersten, zweiten und dritten Dehnungsmessstreifen 5 gemessenen Werte repräsentieren. Die durch Dehnungsmessstreifen 5 gemessenen Werte repräsentieren die vom jeweiligen Dehnungsmessstreifen 5 erfasste Spannung, bzw. Dehnung des Kupplungsarms 4. Von den Dehnungsmessstreifen 5 wird also ein elektrisches Signal ausgegeben, das beispielsweise durch den A/D-Wandler 8 in die Kalibrierungs-Steuereinheit eingeht. Die durch Dehnungsmessstreifen 5 gemessenen Werte bei einer Null-Belastung werden vorteilhaft von allen anderen gemessenen Werten abgezogen (sog. Tarieren).

Die Belastung aus der Reihe der Modellbelastungen werden so gewählt, damit sie den gesamten erwarteten Bereich der Belastung der Anhängerkupplung 2 abdecken. Wenn also beispielsweise für betreffende Anhängerkupplung in jeder der Achsen eine Belastung höchstens von 100 kg erwartet wird, können die jeweiligen Belastungen zum Beispiel mit Schrittgröße von 20 kg abgestuft werden, sodass der Belastungsvektor ($F_X$, $F_Y$, $F_Z$) die Werte für konkrete Modell-belastung aufweist

$$(F_X, F_Y, F_Z) = (a, b, c), \text{ kde } a, b, c \in \{0, 20, 40, 60, 80, 100\}.$$

Jede Komponente kann also sechs unterschiedliche Werte annehmen, sodass in dieser Ausführung insgesamt bis zu $6^3 = 216$ verschiedene Belastungen möglich sind. Genannte Bereiche und Schrittgrößen bei der Abstufung können auch beliebig anders sowie unterschiedlich für verschiedene Achsen sein.

Alle diese Belastungen sind für die Anhängerkupplung 2 anwendbar und für diese werden durch alle Dehnungsmessstreifen 5 die Spannungswerte gemessen. Im Kalibrierungs-Speicher ist also anschließend eine Tabelle mit 216 Zeilen gespeichert, wo in jeder Zeile der Wert der Belastung für jede der Achsen und der durch jeden Dehnungsmessstreifen 5 gemessener Wert enthalten sind. Anschließend wird unter Nutzung der Regressionsanalyse die Funktion der Abhängigkeit der Belastung in Achse X, Y und/oder Z von den durch die Dehnungsmessstreifen 5 gemessenen Werte. Diese Funktion hat also die Gestalt eines Polynoms mit drei Variablen, d.h. drei unabhängigen Variablen, vorteilhaft eines Polynoms des ersten oder zweiten Grades für eine lineare oder parabolische Regression. Die Berechnung der Regressionskoeffizienten, die die betreffende Polynomfunktion der vertikalen oder horizontalen Belastung bestimmen, ist den Fachkundigen bekannt, beispielsweise können dazu bekannte Softwareinstrumente genutzt werden, welche die Regressionskoeffizienten für betreffende Wertentabelle automatisch berechnen. Wird die parabolische Regression genutzt, kann die Tabelle darüber hinaus die Quadratzahlen der durch die Dehnungsmessstreifen 5 gemessenen Werte. Als abhängige Variable ist für die betreffende Funktion der Wert der vertikalen Belastung (bzw. horizontalen Belastung), der bei der Berechnung der Koeffizienten jeweils bekannt ist und bei nachfolgender Messung der Belastung an der Anhängerkupplung 2 die Unbekannte ist, deren Ermittlung das Ziel des vorliegenden Verfahrens ist.

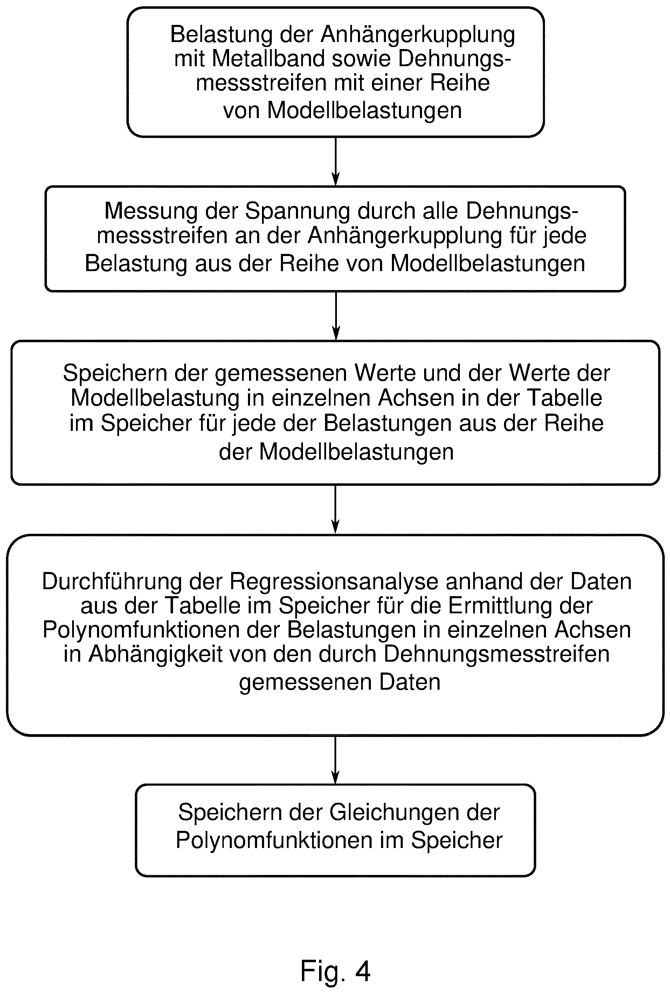

Am Ende der oben beschriebenen Kalibrierungsschritten sind also in dem Kalibrierungs-Speicher die Polynomfunktionen gespeichert, welche die vertikale Belastung der Anhängerkupplung 2 in Z-Achse und horizontale Belastung in den Achsen X und Y repräsentieren. Diese Funktion, d.h. ihre Formel, insbesondere die durch Regressionsanalyse ermittelten Koeffizienten, sind anschließend im Speicher der Vorrichtung 1 zur Messung der vertikalen Belastung gespeichert, falls er nicht identisch mit dem Kalibrierungs-Speicher ist. Die oben beschriebenen Schritte des Kalibrierungsabschnitts des erfindungsgemäßen Verfahrens sind in dem Ablaufdiagramm in Fig. 4 zusammengefasst. Generell kann die Formel der Funktion der Belastung $F_i$ der Anhängerkupplung in einer der Achsen i ∈ {X, Y, Z} bei der Messung mit drei Dehnungsmessstreifen 5 wie folgt aussehen:

$$F_i = D_i + \sum_{j=1}^{n} A_{i,j}\, T_1^j + B_{i,j}\, T_2^j + C_{i,j}\, T_3^j, \text{kde } i \in \{X, Y, Z\}.$$

$A_{i,j}$, $B_{i,j}$, $C_{i,j}$ und $D_i$ sind also Regressionskoeffizienten, der Wert $D_i$ kann ermittelt auch außerhalb der Regressionsanalyse ermittelt und/oder korrigiert werden, beispielsweise für die Kompensation der Spannung im Metallband 3, bedingt durch seine Anbringung an den Kupplungsarm 4. Die Unabhängigen Variablen $T_1^j$, $T_2^j$ a $T_3^j$ sind also die durch Dehnungsmessstreifen 5 gemessenen Werte, potenziert hoch $j$. Die Konstante n repräsentiert den Grad des resultierenden Polynoms, vorteilhaft gleich eins, also handelt es sich um eine lineare Regression, oder zwei für parabolische Regression. Bei Nutzung von mehr als drei Dehnungsmessstreifen 5 würde die oben genannte Gleichung weitere Glieder umfassen, die weiteren Regressionskoeffizienten und einen durch weiteren Dehnungsmessstreifen 5 gemessenen Wert potenziert hoch $j$ umfassen.

Das erfindungsgemäße Verfahren kann noch weitere Kalibrierungsschritte zur Beseitigung kleiner Abweichungen für konkrete Anhängerkupplung 2, für konkretes Metallband 3 oder die durch Ungenauigkeiten in der Messung einzelner Dehnungsmessstreifen 5 verursacht wurden usw. Diese Schritte können einmal ablaufen, insbesondere beim Einbau an die Anhängerkupplung 2, oder wiederholt, z.B. gemäß den Weisungen des Fahrers, bei jedem Startvorgang, nach Überschreitung bestimmter Belastung, nach bestimmter zurückgelegten Wegstrecke usw. Diese Schritte umfassen insbesondere die Belastung der Anhängerkupplung 2 mit der Vorrichtung 1 zur Messung der vertikalen Belastung durch bekannte Modellbelastung. Wenn der durch oben beschrieben Polynomfunktionen berechnete Wert von der tatsächlichen Belastung abweichend ist, werden die durch die Dehnungsmessstreifen 5 gemessenen Werte mit bestimmter Konstante multipliziert, die so gewählt wird, damit die Werte der berechneten Belastung beim Einsetzen der mit der Konstante multiplizierten Werte von den Dehnungsmessstreifen 5 in die Polynomfunktion den tatsächlichen Werten der Modellbelastung entsprechen. Beim Ablauf der Messung, wie weiter beschrieben wird, werden dann die durch die Dehnungsmessstreifen 5 gemessenen Werte mit der genannten Konstante oder Konstanten multipliziert. Die Konstante kann gleich für alle Dehnungsmessstreifen 5, oder für jeden unterschiedlich sein. Die Konstante kann gleich (bzw. Konstanten können gleich sein, wenn es mehrere gibt) für alle drei Polynomfunktionen, d.h. für die Berechnung der Belastung in allen drei Achsen, oder können diese Konstanten für verschiedene Achsen unterschiedlich sein.

Neben den Kalibrierungsschritten, die also insbesondere zur Ermittlung der (Koeffizienten) Polynomfunktionen der Belastung der Anhängerkupplung in Achsen X, Y und Z, umfasst das Verfahren der Messung der vertikalen Belastung gemäß der Ausführung nach vorliegender Erfindung weiter die Schritte der Messung. In den Schritten der Messung kommt es zur Messung der Spannungswerte durch die Dehnungsmessstreifen 5 und das Absenden dieser Werte an die Steuereinheit 8. Die Steuereinheit 8 empfängt also die Signale von drei Dehnungsmessstreifen 5, vorteilhaft bearbeitet durch einen A/D-Wandler 9 oder Wandlern und eventuell einen Signalverstärker. Von der Steuereinheit 8 werden anschließend die drei Werte von den Dehnungsmessstreifen (gemessen zum gleichen Zeitpunkt) in die Polynomfunktion der vertikalen Belastung der Anhängerkupplung 2, in die Polynomfunktion der horizontalen Belastung der Anhängerkupplung 2 in der X-Achse und in die Polynomfunktionen der horizontalen Belastung der Anhängerkupplung 2 in Y-Achse eingesetzt.

Die Koeffizienten dieser Polynome sind die durch oben beschriebene Kalibrierungsschritte ermittelten Regressionskoeffizienten, also anhand einer Reihe der Modellbelastungen der Anhängerkupplung 2 und der Messung durch die Dehnungsmessstreifen 5 bei diesen Belastungen über eine Regressionsanalyse ermittelt. Als abhängige Variable bei der Regressionsanalyse ist für jede der Polynomfunktionen der Belastungswert in einer Achse, die unabhängigen Variablen sind die durch Dehnungsmessstreifen 5 gemessenen Werte. Die Koeffizienten aller drei Polynomfunktionen werden also vorteilhaft durch die Regressionsanalyse der gleichen Daten ermittelt, d.h. Aufgrund der gleichen Reihe von Modellbelastungen. Alternativ ist jedoch möglich, für jede Polynomfunktion andere Daten zu messen und die Regressionsanalysen getrennt durchzuführen. Dies kann zum Beispiel für eine Ausführung geeignet sein, wo für genaue Bestimmung der Polynomfunktionen für die Belastung in verschiedenen Achsen vorteilhaft ist, aus den bei verschiedenen Modellbelastungen gemessenen Daten auszugehen.

Nach dem Einsetzen in die genannten Polynomfunktionen werden diese Funktionen durch die Steuereinheit 8 berechnet und so die Werte der Belastung in einzelnen Achsen ermittelt, insbesondere der Wert der auf die Anhängerkupplung 2 wirkenden vertikalen Belastung. Anschließend werden die berechneten Werte an das Bordcomputer und/oder eine Ausgabevorrichtung 10 gesendet, beispielsweise an ein Bildschirm im Armaturenbrett, an die Lautsprecher, an ein Smartphone, die Hupe, verschiedene Lichtquellen, zum Beispiel die Heckleuchten des Fahrzeuges oder Kontrollanzeige am Armaturenbrett, usw. Mittels der Ausgabevorrichtung 10 wird der Fahrer über die Belastungswerte informiert, sodass er weiß, wann er den Anhänger auf zulässige Höchstkapazität beladen hat, sodass er das Beladen einstellt, oder dass wegen ungeeigneter Gewichtsverteilung am Anhänger zu große Kräfte auf die Anhängerkupplung 2 einwirken.

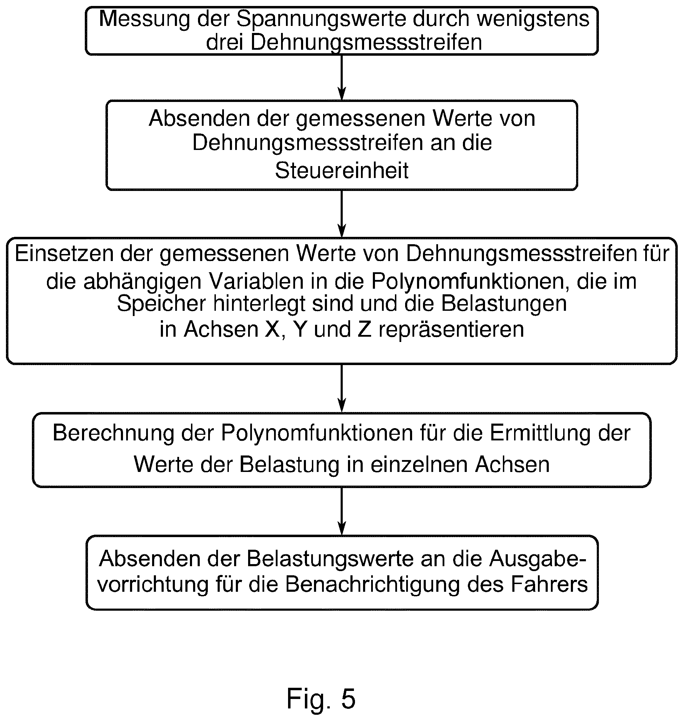

Die oben beschriebenen Schritte des Verfahrens der Messung der vertikalen Belastung sind in dem Ablaufdiagramm in Fig. 5 dargestellt. Die Schritte der Messung aus Fig. 5 werden bei jeder Messung durchgeführt, während die Kalibrierungsschritte aus Fig. 4 weniger häufig durchgeführt werden, üblicherweise nur einmal bei der Entwicklung eines bestimmten Typen der Anhängerkupplung 2 und der Vorrichtung 1 zur Messung der vertikalen Belastung. Die Kalibrierungsschritte für die Beseitigung kleiner Abweichungen müssen nicht vor jeder Messung, jedoch vorteilhaft wenigstens nach dem Einbau des Metallbandes 3 an den Kupplungsarm 4 durchgeführt werden.

Aus dem Wert der vertikalen Belastung kann die Steuereinheit 8 zum Beispiel das Gewicht des Anhängers oder des Ladeguts ermitteln, insbesondere wenn die Steuereinheit 8 die Informationen über die Neigung des Fahrzeuges sowie Anhängers hat. Die Werte der Belastung in der X-Achse können zum Beispiel indizieren, dass der gebremste Anhänger beschädigte oder falsch eingestellte Bremsen hat.

In einer alternativen Ausführung des erfindungsgemäßen Verfahrens der Messung der vertikalen Belastung ist in dem Speicher nur die Polynomfunktion der vertikalen Belastung hinterlegt, und nicht die Funktion der horizontalen Belastung. Während der Regressionsanalyse werden also die Koeffizienten nur für eine Funktion ermittelt. Sonstige Merkmale der Erfindung werden dabei wie oben beschrieben durchgeführt.

## Gewerbliche Anwendbarkeit

Die oben beschrieben Vorrichtung 1 zur Messung der vertikalen Belastung, die Anhängerkupplung 2 und das Verfahren der Messung der vertikalen Belastung können zur Messung der vertikalen und eventuell auch horizontalen Belastung der Anhängerkupplung 2 eines beliebigen Fahrzeuges, insbesondere eines Automobils, und eventuell auch zum Beispiel eines Lastkraftwagens genutzt werden.

## Bezugszeichenliste

1 - Vorrichtung zur Messung der vertikalen Belastung
2 - Anhängerkupplung
3 - Metallband
4 - Kupplungsarm
5 - Dehnungsmessstreifen
6 - Kontaktfläche
7 - Zugkugel
8 - Steuereinheit
9 - A/D-Wandler
10 - Ausgabeeinrichtung

## Patentansprüche

1. Anhängerkupplung (2) umfassend einen Kupplungsarm (4) und eine Zugkugel (7), wobei die Anhängerkupplung (2) eine Vorrichtung (1) zur Messung einer vertikalen Belastung der Anhängerkupplung (2) umfasst, wobei die Vorrichtung (1) ein flexibles Metallband (3) und eine Steuereinheit (8) umfasst, wobei die Anhängerkupplung (2) den zu einem Fahrzeug hin befestigbaren Kupplungsarm (4) aufweist und das Metallband (3) zu einer Seite des Kupplungsarms (4) angebracht ist und an der zur Oberfläche des Kupplungsarms (4) gerichteten Seite drei Dehnungsmessstreifen (5) aufweist, wobei die Steuereinheit (8) datentechnisch mit den Dehnungsmessstreifen (5) verbunden und für die Bestimmung der vertikalen Belastung der Anhängerkupplung (2) unter der Nutzung der Daten von den Dehnungsmessstreifen (5) ausgelegt ist, wobei das Metallband (3) an der zur Oberfläche des Kupplungsarms (4) gerichteten Seite wenigstens vier hervorstehende Kontaktflächen (6) aufweist, wobei zwischen jeden zwei benachbarten Kontaktflächen (6) höchstens ein Dehnungsmessstreifen (5) angeordnet ist.

2. Anhängerkupplung (2) nach Anspruch 1, **dadurch gekennzeichnet, dass** sie ferner eine das Metallband (3) partiell umgebende Abdeckung umfasst.

3.  Anhängerkupplung (2) nach einem der Ansprüche 1 bis 2, **dadurch gekennzeichnet, dass** das Metallband (3) an der Oberseite des Kupplungsarms (4) angebracht ist.

4.  Verfahren der Messung der vertikalen Belastung der Anhängerkupplung (2) nach einem der Ansprüche 1 bis 3, wobei die Vorrichtung (1) für die Messung der vertikalen Belastung ferner einen Speicher aufweist, **dadurch gekennzeichnet, dass** es die Schritte umfasst:

    • Messung der Spannungswerte durch wenigstens drei Dehnungsmessstreifen (5),
    • Absenden der Daten von Dehnungsmessstreifen an die Steuereinheit (8),
    • Einsetzen der von Dehnungsmessstreifen (5) gemessenen Werte für die unabhängigen Variablen durch die Steuereinheit (8) in die im Speicher hinterlegte Polynomfunktion, welche die vertikale Belastung der Anhängerkupplung (2) repräsentiert, wobei die Koeffizienten der die vertikale Belastung repräsentierenden Polynomfunktion Regressionskoeffizienten sind, die durch die Regressionsanalyse ermittelt wurden, wo die abhängige Variable der tatsächliche Wert der vertikalen Belastung ist und die unabhängigen Variablen die von Dehnungsmessstreifen (5) gemessenen Werte während einer Serie von Modellbelastungen der Anhängerkupplung (2) verteilt im ganzen Bereich der erwarteten Belastung der Anhängerkupplung (2) sind, und
    • Berechnung der die vertikale Belastung repräsentierenden Polynomfunktion für die Ermittlung des Wertes der auf die Anhängerkupplung (2) wirkenden vertikalen Belastung.

5.  Verfahren der Messung der vertikalen Belastung nach Anspruch 4 **dadurch gekennzeichnet, dass** es ferner die Schritte umfasst:

    • Einsetzen der von Dehnungsmessstreifen gemessenen Werte durch die Steuereinheit in zwei weitere Polynomfunktionen, welche die vertikale Belastung der Anhängerkupplung in zwei zueinander senkrechten horizontalen Achsen X und Y repräsentieren, wobei die Koeffizienten der die vertikale Belastung in Achse X repräsentierenden Polynomfunktion Regressionskoeffizienten sind, die durch die Regressionsanalyse ermittelt wurden, wo die abhängige Variable der tatsächliche Wert der vertikalen Belastung in Achse X ist, und die Koeffizienten der die vertikale Belastung in Achse Y repräsentierenden Polynomfunktion Regressionskoeffizienten sind, die durch die Regressionsanalyse ermittelt wurden, wo die abhängige Variable der tatsächliche Wert der vertikalen Belastung in Achse Y ist, wobei die unabhängigen Variablen in beiden Fällen die von Dehnungsmessstreifen gemessenen Werte während einer Serie von Modellbelastungen der Anhängerkupplung verteilt im ganzen Bereich der erwarteten Belastung der Anhängerkupplung sind, und
    • Berechnung der die horizontale Belastung in Achsen X und Y repräsentierenden Polynomfunktionen für die Ermittlung des Wertes der auf die Anhängerkupplung wirkenden horizontalen Belastung (2).

6.  Verfahren zur Messung der vertikalen Belastung nach beliebigen der Ansprüche 4 und 5 **dadurch gekennzeichnet, dass** es ferner den Schritt umfasst:

    • Senden des Wertes der vertikalen Belastung und/oder des Wertes der horizontalen Belastung in Achsen X und/oder Y an eine Ausgabeeinrichtung (10).

**Claims**

1.  Trailer coupling (2) comprising a coupling arm (4) and a hitch ball (7), wherein the trailer coupling (2) comprises a device (1) for measuring a vertical load of the trailer coupling (2), wherein the device (1) comprises a flexible metal band (3) and a control unit (8), wherein the trailer coupling (2) has the coupling arm (4) attachable towards a vehicle, and the metal band (3) is attached to one side of the coupling arm (4) and has three strain gauges (5) on the side directed towards the surface of the coupling arm (4), wherein the control unit (8) is connected by data technology to the strain gauges (5) and is configured to determine the vertical load of the trailer coupling (2) using the data from the strain gauges (5), wherein the
    metal band (3) has at least four protruding contact surfaces (6) on the side directed towards the surface of the coupling arm (4), wherein at most one strain gauge (5) is arranged between each two adjacent contact surfaces (6).

2.  Trailer coupling (2) according to claim 1, **characterized in that** it also comprises a cover partially surrounding the metal band (3).

3.  Trailer coupling (2) according to any one of claims 1 to 2, **characterized in that** the metal band (3) is attached to the upper side of the coupling arm (4).

4. Method for measuring the vertical load of the trailer coupling (2) according to any one of claims 1 to 3, wherein the device (1) for measuring the vertical load further has a memory, **characterized in that** it comprises the steps:

- measuring the stress values with at least three strain gauges (5),
- sending the data from the strain gauges to the control unit (8),
- inserting the values measured by the strain gauges (5) for the independent variables by the control unit (8) into the polynomial function stored in the memory, which represents the vertical load of the trailer coupling (2), wherein the coefficients of the polynomial function representing the vertical load are regression coefficients determined by the regression analysis, where the dependent variable is the actual value of the vertical load and the independent variables are the values measured by strain gauges (5) during a series of model loads on the trailer coupling (2) distributed over the whole range of the expected load on the trailer coupling (2), and
- calculating the polynomial function representing the vertical load for determining the value of the vertical load acting on the trailer coupling (2).

5. Method for measuring the vertical load according to claim 4 **characterized in that** it further comprises the steps:

- inserting the values measured by the strain gauges by the control unit into two further polynomial functions, which represent the vertical load of the trailer coupling into two mutually perpendicular horizontal axes X and Y, wherein the coefficients of the polynomial function representing the vertical load in axis X are regression coefficients determined by the regression analysis, where the dependent variable is the actual value of the vertical load in axis X, and the coefficients of the polynomial function representing the vertical load in axis Y are regression coefficients determined by the regression analysis, where the dependent variable is the actual value of the vertical load in axis Y, wherein the independent variables in both cases are the values measured by strain gauges during a series of model loads on the trailer coupling distributed over the whole range of the expected load on the trailer coupling, and
- calculating the polynomial functions representing the horizontal load in axes X and Y for determining the value of the horizontal load (2) acting on the trailer coupling.

6. Method for measuring the vertical load according to any one of claims 4 and 5 **characterized in that** it further comprises the step:

- sending the value of the vertical load and/or the value of the horizontal load in axes X and/or Y to an output apparatus (10).

**Revendications**

1. Attelage de remorque (2) comprenant un bras d'attelage (4) et une boule d'attelage (7), dans lequel l'attelage de remorque (2) comprend un dispositif (1) de mesure d'une charge verticale de l'attelage de remorque (2), dans lequel le dispositif (1) comprend une bande métallique (3) flexible et un dispositif de commande (8), dans lequel l'attelage de remorque (2) présente le bras d'attelage (4) pouvant être fixé vers un véhicule, et la bande métallique (3) est montée d'un côté du bras d'attelage (4) et présente trois jauges de contrainte (5) au niveau du côté dirigé vers la surface du bras d'attelage (4), dans lequel le dispositif de commande (8) est relié par technique de données aux jauges de contrainte (5) et est conçu pour la détermination de la charge verticale de l'attelage de remorque (2) en utilisant les données des jauges de contrainte (5), dans lequel la
bande métallique (3) présente au niveau du côté dirigé vers la surface du bras d'attelage (4) au moins quatre surfaces de contact (6) en saillie, dans lequel au plus une jauge de contrainte (5) est agencée entre deux surfaces de contact (6) contiguës.

2. Attelage de remorque (2) selon la revendication 1, **caractérisé en ce qu'**il comprend de plus un recouvrement entourant partiellement la bande métallique (3).

3. Attelage de remorque (2) selon l'une quelconque des revendications 1 à 2, **caractérisé en ce que** la bande métallique (3) est montée au niveau du côté supérieur du bras d'attelage (4).

**4.** Procédé de mesure de la charge verticale de l'attelage de remorque (2) selon l'une quelconque des revendications 1 à 3,
dans lequel le dispositif (1) de mesure de la charge verticale présente de plus une mémoire, **caractérisé en ce qu'**il comprend les étapes suivantes :

- la mesure des valeurs de tension par au moins trois jauges de contrainte (5),
- l'envoi des données des jauges de contrainte au dispositif de commande (8),
- l'utilisation des valeurs mesurées par des jauges de contrainte (5) pour les variables indépendantes par le dispositif de commande (8) dans la fonction polynomiale enregistrée dans la mémoire qui représente la charge verticale de l'attelage de remorque (2), dans lequel les coefficients de la fonction polynomiale représentant la charge verticale sont des coefficients de régression qui ont été déterminés par l'analyse de régression où la variable dépendante est la valeur réelle de la charge verticale, et les variables indépendantes sont les valeurs mesurées par des jauges de contrainte (5) pendant une série de charges de modèle de l'attelage de remorque (2) réparties dans la plage entière de la charge attendue de l'attelage de remorque (2) et
- le calcul de la fonction polynomiale représentant la charge verticale pour la détermination de la valeur de la charge verticale agissant sur l'attelage de remorque (2).

**5.** Procédé de mesure de la charge verticale selon la revendication 4 **caractérisé en ce qu'**il comprend de plus les étapes suivantes :

- l'utilisation des valeurs mesurées par des jauges de contrainte par le dispositif de commande dans deux autres fonctions polynomiales qui représentent la charge verticale de l'attelage de remorque dans deux axes X et Y horizontaux perpendiculaires l'un à l'autre, dans lequel les coefficients de la fonction polynomiale représentant la charge verticale dans l'axe X sont des coefficients de régression qui ont été déterminés par l'analyse de régression où la variable dépendante est la valeur réelle de la charge verticale dans l'axe X, et les coefficients de la fonction polynomiale représentant la charge verticale dans l'axe Y sont des coefficients de régression qui ont été déterminés par l'analyse de régression où la variable dépendante est la valeur réelle de la charge verticale dans l'axe Y, dans lequel les variables indépendantes sont dans les deux cas les valeurs mesurées par des jauges de contrainte pendant une série de charges de modèle de l'attelage de remorque réparties dans la plage entière de la charge attendue de l'attelage de remorque et
- le calcul de la fonction polynomiale représentant la charge verticale dans les axes X et Y pour la détermination de la valeur de la charge horizontale (2) agissant sur l'attelage de remorque.

**6.** Procédé de mesure de la charge verticale selon l'une quelconque des revendications 4 et 5, **caractérisé en ce qu'**il comprend de plus l'étape suivante :

- l'envoi de la valeur de la charge verticale et/ou de la valeur de la charge horizontale dans les axes X et/ou Y à un appareil de sortie (10).

Fig. 1

Fig. 2

Fig. 3

Belastung der Anhängerkupplung
mit Metallband sowie Dehnungsmessstreifen mit einer Reihe
von Modellbelastungen

Messung der Spannung durch alle Dehnungsmessstreifen an der Anhängerkupplung für jede
Belastung aus der Reihe von Modellbelastungen

Speichern der gemessenen Werte und der Werte der
Modellbelastung in einzelnen Achsen in der Tabelle
im Speicher für jede der Belastungen aus der Reihe
der Modellbelastungen

Durchführung der Regressionsanalyse anhand der Daten
aus der Tabelle im Speicher für die Ermittlung der
Polynomfunktionen der Belastungen in einzelnen Achsen
in Abhängigkeit von den durch Dehnungsmesstreifen
gemessenen Daten

Speichern der Gleichungen der
Polynomfunktionen im Speicher

Fig. 4

Messung der Spannungswerte durch wenigstens
drei Dehnungsmessstreifen

↓

Absenden der gemessenen Werte von
Dehnungsmessstreifen an die
Steuereinheit

↓

Einsetzen der gemessenen Werte von Dehnungsmessstreifen für
die abhängigen Variablen in die Polynomfunktionen, die im
Speicher hinterlegt sind und die Belastungen
in Achsen X, Y und Z repräsentieren

↓

Berechnung der Polynomfunktionen für die Ermittlung der
Werte der Belastung in einzelnen Achsen

↓

Absenden der Belastungswerte an die Ausgabevorrichtung für die Benachrichtigung des Fahrers

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170334256 A
- DE 202011105552 U1
- US 20190033150 A
- DE 102013007727 A1
- DE 102004043181 B3
- EP 3854612 A1